# EUROPÄISCHE PATENTSCHRIFT

(11) **EP 2 029 906 B1**
(45) Veröffentlichungstag und Bekanntmachung des Hinweises auf die Patenterteilung: **09.04.2014**
(21) Anmeldenummer: 07728810.8
(22) Anmeldetag: 04.05.2007
(51) Int. Cl.: F16C 19/18, F16C 19/56, F16C 33/64, F16C 35/06

(54) **VERFAHREN ZUR HERSTELLUNG EINES MEHRREIHIGEN AXIAL VORGESPANNTENS SCHRÄGKUGELLAGERS**
PRODUCTION METHOD OF A MULTIPLE-ROW, AXIALLY BIASED ANGULAR BALL BEARING
PROCÉDÉDE FABRICATION D'UN ROULEMENT À BILLES À CONTACT OBLIQUE PRÉCONTRAINT AXIALEMENT SUR PLUSIEURS RANGS

(30) Priorität: 01.06.2006 DE 102006025551
(43) Veröffentlichungstag der Anmeldung: 04.03.2009
(73) Patentinhaber: Schaeffler Technologies GmbH & Co. KG, 91074 Herzogenaurach (DE)
(72) Erfinder: ABRAHAM, Uwe, 45665 Recklinghausen (DE); WINKLER, Manfred, 91086 Aurachtal (DE); VON PETERY, Georg, 91462 Dachsbach (DE); DRÖGE, Andreas, 91097 Oberreichenbach (DE)
(86) Internationale Anmeldenummer: PCT/EP2007/054357
(87) Internationale Veröffentlichungsnummer: WO 2007/137929

(56) Entgegenhaltungen:
- WO-A-2006/018132
- DE-A1-102004 043 351
- DE-U1- 8 110 141
- JP-A- 2002 310 175
- US-A- 3 077 061
- US-A- 3 330 634

## Beschreibung

### Gebiet der Erfindung

Die Erfindung bezieht sich auf *ein Verfahren zur Herstellung eines mehrreihigen axial vorgespannten Schrägkugellagers mit einem einstückigen Außenring und einem aus zwei Innenringhälften bestehenden Innenring, wobei der Außen- und Innenring stirnseitige Anlageflächen aufweisen, wobei jede Innenringhälfte wenigstens eine von einer Schulter begrenzte Laufbahn aufweist*, *welche mit einer von einer Schulter begrenzten Laufbahn des Außenrings korrespondiert, und bei dem in den Laufbahnen Lagerkugeln angeordnet sind, welche durch die Schultern axial abgestützt sind, wobei wenigstens eine Innenringhälfte zur Einstellung einer spielfreien Vorspannkraft axial verschiebbar ist, und wobei zwischen axial inneren Stirnkanten der Innenringhälften wenigstens im unverspannten Zustand ein Abstand eingestellt wird.*

### Hintergrund der Erfindung

Wälzlager, insbesondere mehrreihige Schrägkugellager, müssen bei der Montage gezielt verspannt werden, um einen einwandfreien Lauf beispielsweise des Kegelradgetriebes eines Hinterachs-Ausgleichsgetriebes sicherzustellen. In der Serienmontage bauartgleicher Baueinheiten, beispielsweise Kegelrad-Getriebeeinheiten, ist es bislang üblich, für jede Baueinheit unter Aufbringung einer definierten Axialkraft auf die mit einer definierten Drehzahl umlaufende Welle vorab das jeweilige Lagerreibmoment zu ermitteln. Anschließend wird zumeist an einem anderen Montageort eine Bundmutter aufgebracht. Diese wird dabei solange verschraubt, bis sich wiederum bei der definierten Wellendrehzahl das zuvor für die definierte Axialkraft ermittelte Lagerreibmoment einstellt. Hierdurch wird sichergestellt, dass jede Bau- bzw. Getriebeeinheit in ihren Wälzlagern mit exakt der zuvor aufgebrachten Axialkraft verspannt ist.

Die DE 39 25 388 A1 beschreibt ein Verfahren zum Aufbringen einer definierten Vorspannkraft auf Wälzlager einer Welle, insbesondere auf Kegelrollenlager einer Kegelradwelle eines Kegelradgetriebes, wobei eine an der Welle angreifende und sich an einer Stütze abstützende Bundmutter unter Berücksichtigung zuvor ermittelter Lagerreibmomente gezielt verschraubt wird. Die Vorspannkraft wird dadurch aufgebracht, dass ausgehend von einem gerade eben verspannungsfreien Nullpunkt die Bundmutter um einen bauartspezifischen Vorspannwinkel verdreht wird. Der bauartspezifische Vorspannwinkel muss dabei ermittelt werden und kann anschließend an sämtlichen Baueinheiten der gleichen Bauart, beispielsweise Getriebeeinheiten des gleichen Kegelradgetriebes, zur Anwendung kommen.

Aus der DE 196 03 701 A1 ist ein Dreiringlager, mit mindestens drei Reihen von Wälzkörpern und einem zwischen Innen- und Außenring angeordneten Zwischenring bekannt, wobei der Zwischenring zwischen zwei Wälzkörperreihen drehbar angeordnet ist. Außerdem weist der Innen- und/oder Außenring ebenfalls Laufbahnen für zwei Wälzkörperreihen auf und ist geteilt ausgeführt, wobei durch die Trennstelle des Lagerringes das Maß der Vorspannung gemeinsam für alle drei Wälzkörperreihen einstellbar ist. Dadurch, dass das äußere System auf zwei Wegen, nämlich über den Zwischenring direkt und eine Wälzkörperreihe indirekt verbunden ist, wobei die unterschiedliche Bewegungsmöglichkeit der drei Ringe erhalten bleibt, sollen beide Systeme mit einem Vorgang eingestellt werden können, wodurch eine Wälzkörperreihe eingespart werden soll. Ein derartiges Wälzlager mit Zwischenring eignet sich nur für sehr spezielle Anwendungsfälle und lässt sich an einer normalen Welle nicht verwenden.

Aus der DE 100 57 861 A1 ist ein einreihiges oder zweireihiges Schrägkugellager für extrem schnell drehende Wellen, beispielsweise von Dentalbohrern, bekannt, das durch eine Vorspannung beim Anlaufen nicht überbelastet werden soll. Das Schrägkugellager ist im Ruhezustand bei einer Drehzahl gleich Null nicht vorgespannt. Erst durch die Drehung und die dabei entstehenden Fliehkräfte wird auf den Kugeln eine Vorspannung aufgebaut. Die Anstellung der Kugeln kann wahlweise als 0-Paket oder als X-Paket erfolgen.

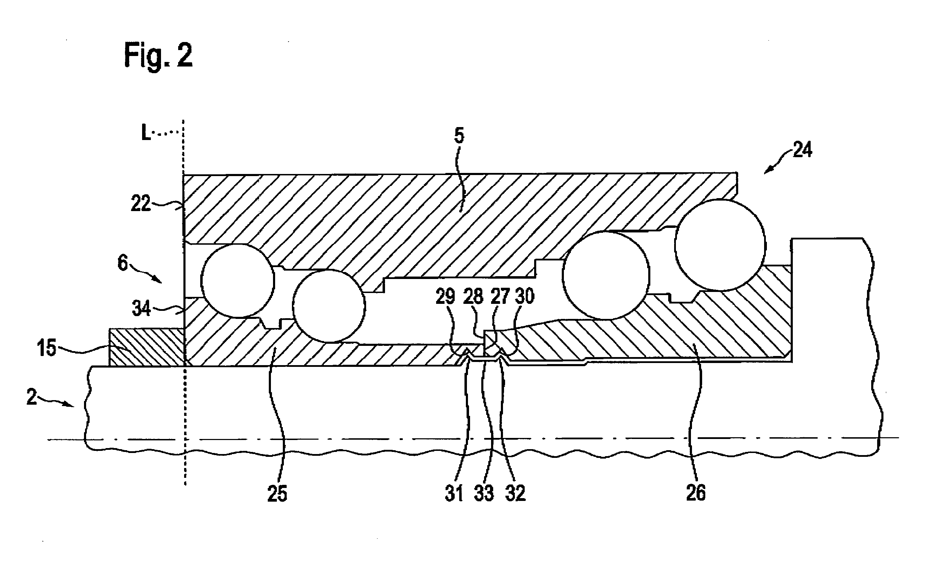

In der DE 100 57 861 A1 ist ein Vorspannungsregler vorgesehen, der die Vorspannung in Abhängigkeit von bestimmten Betriebsbedingungen verändert. Die gewünschte Vorspannung soll sich erst bei Erreichen der Betriebsdrehzahl einstellen. Im Ruhezustand ist ein Axialspiel, also keine Vorspannung einzustellen. Durch die fehlende Vorspannung kann die Betriebsdrehzahl besonders schnell angefahren werden. Beschrieben wird dort mit Bezug auf die dortige Fig. 2 ein 0-Paket aus zwei einreihigen Schrägkugellagern mit einem kleinen axialen Spiel im Ruhezustand.

Das axiale Spiel wird dort dadurch eingestellt, dass eine Stirnfläche des Innenringes spanabhebend derart bearbeitet wird, das diese Stirnkante mit der Stirnkante des Außenringes fluchtet, womit bewirkt werden soll, dass die Stirnkanten von Innen- und Außenring auf Blocklage mit den Stirnflächen des zweiten einreihigen Schrägkugellagers gebracht werden können. Diese Anordnung soll ein Spiel gewährleisten, wodurch ein spannungsloses und daher schnelles Anfahren der mit Drehgeschwindigkeiten über 500000 U/min rotierenden Welle ermöglicht werden soll. Ein Verklemmen der Kugeln zwischen den Ringen durch den Anstieg der Vorspannkraft infolge der Kugelfliehkräfte - als Folge sehr hoher Drehzahlen - soll dadurch vermieden werden.

Die US 3,150,471 beschreibt Lagerpakete, die aus mehreren einreihigen Lagern zusammengesetzt sind, nämlich aus Rillenkugellagern bzw. Vierpunktlagern. Es handelt sich dabei um Lager, die axiale Kräfte in zwei Richtungen aufnehmen können. Die dort beschriebenen Lager weisen ein Umkehrspiel bei einem Richtungswechsel der axialen Belastung auf, woraus der Fachmann ableiten kann, dass die Lager nicht axial vorgespannt werden; dies auch deshalb, weil die dort beschriebene Lösung der gleichmäßigen Kraftaufnahme zweier oder mehrerer als Tandem aneinander gesetzter Lager dient. Die US 3,150,471 beschreibt ferner Lagerpakete von einreihigen Kugellagern mit geteilten Innen- oder Außenringen, bei welchen unter Last durch Abschleifen der Überstandsmaße an der Trennfuge des geteilten Innen- oder Außenringes ein gleichmäßigeres Tragen der beiden Lager unter Last erreicht werden soll. Als Grund für diese Maßnahme wird die Beseitigung der unter Last unterschiedlich stark ausgeprägten elastischen Einfederung von Lager zu Lager angegeben.

Aus der DE 85 01 369 U1 ist ein vierreihiges Schrägkugellager mit einteiligem Außenring und aus zwei Lagerinnenringhälften bestehendem Lagerinnenring bekannt, bei welchem der axial bewegliche Lagerinnenring an seinen äußeren Enden jeweils eine axial nach außen kegelförmig geneigte Gleitfläche aufweist, wobei ein Spannring zwischen dieser Gleitfläche und einer radialen Fläche angeordnet ist. Beim Durchschieben einer Welle wird der Spannring entlang der Gleitfläche radial verschoben, wodurch die Vorspannung des Lagers eingestellt werden soll.

Schließlich ist aus der DE 198 39 481 C2 ein Verteilergetriebe für ein Kraftfahrzeug bekannt, bei dem eine Kegelritzelwelle über zwei voneinander beabstandete und axial vorgespannte Wälzlager in einem Getriebegehäuse gelagert ist, wobei die Wälzlager als einseitig belastbare zweireihige Tandem - Schrägkugellager ausgebildet sind, die zueinander in O-Anordnung angestellt sind. Die Vorspannung wird dort derart erzeugt, dass durch Aufschrauben einer Bundmutter auf den Schaft der Kegelritzelwelle das Kegelritzel in Richtung Gehäuse axial bewegt wird, so dass beide Lager unter Vorspannung gesetzt sind. Zwischen den beiden zweireihigen Schrägkugellagern ist auf dem Schaft der Kegelritzelwelle eine Distanzhülse angeordnet, die sich einerseits am Innenring des Lagers und andererseits an einem nicht bezeichneten Absatz des Schaftes abstützt. Beim Anziehen des Gewindeteiles wird zunächst der Innenring verschoben, so dass auf die Distanzhülse eine Verformungskraft ausgeübt wird.

WO2006l018132A1 *zeigt mehrreihige Schrägkugellager mit geteilten Außenringen und geteilten Innenringen oder mit einem einstückigen Außenring und geteilten Innenringhälften. Jede Innenringhälfte weist wenigstens eine von einer Schulter begrenzte Laufbahn auf, welche mit einer von einer Schulter begrenzten Laufhahn des Außenrings korrespondiert. In den Laufbahnen sind Lagerkugeln angeordnet, welche durch die Schultern axial angestützt sind. Die Innenringhälften sind zur Einstellung einer spielfreien Vorspannkraft axial aufeinander zu verschiebbar ist, wozu zwischen axial inneren Stirnkanten der Innenringhälften wenigstens im unverspannten Zustand ein Spalt vorgesehen ist.*

*In* US3,007,061A *ist eine Schleifmaschine und ein Verfahren zum Schleifen der Stirnseite eines Außenrings eines Schrägkugellagers auf ein Maß beschrieben, welches die richtige Vorspannung des in eine Baugruppe eingebauten Schrägkugellagers bestimmt. Dazu wird ein als Standardring bezeichneter Lehrring als Innenring und entsprechende Standardkugeln als Lehren werden zwischen den Lehrring und den zu bearbeitenden Außenring gespannt und der Außenring auf das Einbaumaß gebracht. Mögliche Abweichungen der Abmessungen der später verwendeten Innenringe und Kugeln von den Lehrenmaßen sind mit diesem Verfahren nicht berücksichtigt.*

Gemeinsam ist jenen vorbekannten Lösungen, bei denen eine Vorspannung, also eine spielfreie Lagerung der Kugeln zwischen Innen- und Außenring, eine Rolle spielt, dass das Maß der Vorspannung nur sehr ungenau oder auf komplizierte Weise eingestellt werden kann. Üblicherweise erfolgt die Einstellung der Vorspannung durch Reibmomentmessung oder durch Wegmessung. Ferner ist es bei bislang bekannten Lagern, welche insbesondere zur Lagerung von Kegelritzelwellen verwendet werden, vergleichsweise schwierig, diese vorzumontieren.

Üblicherweise liefert der Lagerhersteller die Bestandteile des Lagers in Einzelteilen an den Endkunden, beispielsweise einen Getriebe- oder Automobilhersteller, welcher die Einzelteile, nämlich meistens zwei zweireihigen Schrägkugellager mit den dazwischen angeordneten Lagerkugeln, erst bei der Montage auf der zu lagernden Welle zusammensetzt. Die führt zu erheblichem Zeitaufwand bei der Montage und birgt zudem die Gefahr des Verlustes von Einzelteilen in sich.

### Aufgabe der Erfindung

Der Erfindung liegt die Aufgabe zugrunde, *ein Verfahren zur Einstellung eines* mehrreihigen und axial vorgespannten Schrägkugellagers zu schaffen, *mit* dem die Vorspannung einfach und präzise einstellbar ist.

### Zusammenfassung der Erfindung

*Die Aufgabe ist mit einem Verfahren nach dem Gegenstand des Anspruchs 1 gelöst.*

*Um eine einfache und präzise Einstellung der Vorspannung am Schrägkugellager zu erreichen, sieht das Verfahren vor, dass in einem ersten Schritt ein Rohling des Schrägkugellagers mit einem bezüglich der axialen Breite übermaßigen Innenring und bezüglich der axialen Breite übermaßigen Außenring mit einer der Vorspannkraft entsprechenden axialen Kraft beaufschlagt und festgelegt wird, und dass in einem zweiten Schritt die axiale Breite des Rohlings zur Erzeugung fluchtender Anlageflächen verringert wird.*

Der Erfindung liegt die Erkenntnis zugrunde, dass die Vorspannung des Schrägkugellagers dann eingestellt ist, wenn wenigstens zwei als Anschlagflächen ausgebildete Stirnseiten des Schrägkugellagers miteinander fluchten und im nicht vorgespannten Zustand außer Flucht angeordnet sind.

Die Erfindung geht daher *von einem Verfahren zur Herstellung* von einem mehrreihigen axial vorgespannten Schrägkugellager mit einem einstückigen Außenring und einem aus zwei Innenringhälften bestehenden Innenring *aus,* wobei jede Innenringhälfte wenigstens eine von einer Schulter begrenzte Laufbahn aufweist, welche mit einer von einer Schulter begrenzten Laufbahn des Außenrings korrespondiert, und bei dem in den Laufbahnen Lagerkugeln angeordnet sind, welche durch die Schultern axial abgestützt sind, wobei wenigstens eine Innenringhälfte zur Einstellung einer spielfreien Vorspannkraft axial verschiebbar ist, und wobei zwischen axial inneren Stirnkanten der Innenringhälften wenigstens im unverspannten Zustand ein Abstand *eingestellt wird. Es wird angestrebt*, dass der axiale Abstand wenigstens von zwei stirnseitigen Anlageflächen des Schrägkugellagers im vorgespannten Zustand gleich Null ist, und dass der axiale Abstand wenigstens von zwei stirnseitigen Anlageflächen des Schrägkugellagers im spannungslosen Zustand größer Null ist.

Durch diesen Aufbau wird vorteilhaft erreicht, dass die Vorspannung in der Fabrik des Lagerherstellers entsprechend den Kundenwünschen eingestellt werden kann, wobei der Kunde, in der Regel ein Automobilhersteller, das Schrägkugellager nur noch auf Block montieren muss. Darunter ist zu verstehen, dass wenigstens eine Innenringhälfte solange axial verschoben wird, bis eine Stirnkante der Innenringhälfte mit einer anderen Stirnkante, beispielsweise des Außenringes oder der anderen Stirnkante fluchtet, der axiale Abstand zwischen diesen Kanten also gleich Null ist. Das axiale Verschieben der Innenringhälfte geschieht beispielsweise mittels einer üblichen Bundmutter, welche die Innenringhälfte gleichzeitig in ihrer Lage fixiert.

Die korrekte Einstellung der Vorspannung geschieht also durch einfaches, kantengenaues Verschieben wenigstens einer Innenringhälfte gegenüber dem Außenring und/oder der anderen Innenringhälfte. Deshalb lässt sich die Vorspannung schnell und prozesssicher einstellen und dies mittels einfachster Hilfsmittel kontrollieren, beispielsweise durch optische Messinstrumente.

Ein weiterer Vorteil der Erfindung ist darin zu sehen, dass ein derart *eingestelltes* Schrägkugellager als fertig vormontierte so genannte Lagerpatrone ausgeliefert werden kann. Der Endkunde muss diese Lagerpatrone nur noch auf eine Welle schieben und durch axiales Verschieben einer Innenringhälfte die Vorspannung einstellen, Hierdurch entfallen eine Reihe bislang notwendiger, teilweise maschinenintensiver Arbeits- und Sicherheitsschritte. Das Schrägkugellager bildet nun also eine leicht zu handhabende Einheit, bei welcher die Gefahr des Verlustes oder der Beschädigung von Einzelkomponenten praktisch vollständig ausgeschlossen ist. Dies umso mehr, wenn die Innenringhälften beispielsweise durch eine Klammer oder durch ein anderes geeignetes Halteelement axial gesichert sind, so dass die Innenringhälften nicht abfallen können. Das Halteelement ist dabei derart ausgebildet, dass ein leichtes axiales

Spiel zur Ermöglichung der Einstellung der Vorspannung gewährleistet ist.

Außerdem kann vorgesehen sein, dass der axiale Abstand einer stirnseitigen Anlagefläche des Außenringes mit einer stirnseitigen Anlagefläche einer Innenringhälfte im vorgespannten Zustand gleich Null ist und dass der axiale Abstand der stirnseitigen Anlagefläche des Außenringes mit der stirnseitigen Anlagefläche der Innenringhälfte im spannungslosen Zustand größer Null ist. Hier dient also die axial äußere Stirnkante der Innenringhälfte und die axiale Außenkante des Außenringes als Meß- und Fixpunkt zu Einstellung der gewünschten Vorspannung, welches eine besonders einfache Montage ermöglicht.

Alternativ dazu kann vorgesehen sein, dass der axiale Abstand einer axial inneren stirnseitigen Anlagefläche einer Innenringhälfte mit einer axial inneren stirnseitigen Anlagefläche der anderen Innenringhälfte im vorgespannten Zustand gleich Null ist, und dass der axiale Abstand der stirnseitigen Anlagefläche der Innenringhälfte mit der axial inneren stirnseitigen Anlagefläche der anderen Innenringhälfte im spannungslosen Zustand größer Null ist. Anders formuliert treffen hier die axial inneren Stirnkanten der Innenringhälften dann aufeinander, wenn eine Innenringhälfte soweit axial nach innen verschoben wurde, bis das korrekte Maß der Vorspannung eingestellt ist.

*Erfindungsgemäß wird im zweiten Schritt die axiale Breite eines oder beider Innenringhälften des Innenringes zur Erzeugung flüchtender Anlageflächen.*

*In einer weiteren Ausgestaltung des erfindungsgemäßen Verfahrens ist vorgesehen, dass im zweiten Schritt die axiale Breite eines oder beider Innenringhälften des Innenringes und die axiale Breite des Außenrings verringert wird.*

*Die Erfindung geht schließlich aus von einem dazu alternativen Verfahren zur Herstellung eines mehrreihigen axial vorgespannten Schrägkugellagers mit einem einstückigen Außenring und einem aus zwei Innenringhälften bestehenden Innenring, wobei jede Innenringhälfte wenigstens eine von einer Schulter begrenzte Laufbahn aufweist, welche mit einer von einer Schulter begrenzten Laufbahn des Außenrings korrespondiert, und bei dem in den Laufbahnen Lagerkugeln angeordnet sind, welche durch die Schultern axial abgestützt sind, wobei wenigstens eine Innenringhälfte zur Einstellung einer spielfreien Vorspannkraft axial verschoben wird, und wobei zwischen axial inneren Stimkanten der Innenringhälften wenigstens im unverspannten Zustand ein Abstand eingestellt wird.*

*Um ein alternatives Herstellverfahnen anzugeben, ist vorgesehen, dass in einem ersten Schritt der Außenring und die Innenringhälfte mit dazwischen angeordneten Lagerkugeln zusammengesetzt werden, dass in einem zweiten Schritt ein Maßring mit der Breite "s" und übermaßige Maßkugeln mit dem Außenring verbunden werden, wobei ein Abstand zwischen dem Maßring und der einen Innenringhälfte eingestellt wird, dass in einem dritten Schritt eine der einzustellenden Vorspannung entsprechende axiale Kraft auf den Maßring aufgebracht und der Maßring fixiert wird, dass in einem vierten Schritt der Abstand "Δs" zwischen dem Maßring und der genannten Innenringhälfte gemessen wird, und dass in einem fünften Schritt die andere Innenringhälfte hergestellt wird, wobei die axiale Breite dieser anderen Innenringhälfte der Summe aus der Breite s des Maßrings und dem Abstand Δs entspricht.*

In praktischen Ausgestaltungen der Erfindung *kann ein Verfahren zur Herstellung* eines vierreihigen Schrägkugellagers, *vorzugsweise zur Lagerung einer Kegelritzelwelle in einem Verteilergetriebe,* ausgebildet ist, wobei jede Innenringhälfte zwei Laufbahnen und der Außenring vier Laufbahnen aufweist verwendet ist. *Es hat sich nämlich überraschend gezeigt, dass sich das erfindungsgemäße Schrägkugellager besonders vorteilhaft in einem derartigen Verteilergetriebe einsetzen lässt, da dort die Probleme bezüglich einer exakten und einfachen Einstellung der jeweils benötigten Vorspannung besonders groß sind.*

Üblicherweise werden zwei zweireihige Schrägkugellager verwendet, wobei die gewünschte Vorspannung über zwischen den Schrägkugellagern angeordneten verformbaren Distanzhülsen eingestellt wird, wobei über das Maß der Verformung bzw. des Verformungsweges Aussagen über die anliegende Vorspannkraft getroffen werden. Dies ist letztendlich nicht sonderlich präzise, so dass gerade auf diesem Produktsektor ein großer Wunsch nach einer exakten Einstellmöglichkeit der Vorspannkraft besteht. Außerdem müssen die separaten zweireihigen Schrägkugellager mit hoher Sorgfalt und hohem Arbeitsaufwand montiert werden. Die Ausgestaltung des Schrägkugellagers als vierreihiges Schrägkugellager ist insofern vorteilhaft, weil nunmehr nur noch ein Lagerteil montiert werden muss.

In einer anderen vorteilhaften Weiterbildung dieser Ausgestaltungsform kann vorgesehen sein, dass die Kegelritzelwelle in einem Getriebegehäuse gelagert ist und mit einem Kegelritzel über ein Tellerrad ein im Getriebegehäuse gelagertes Ausgleichsgetriebe antreibt, wobei im Ausgleichsgetriebe Achswellen gelagert sind, die über Abtriebs- und Ausgleichsräder miteinander in Wirkverbindung sind.

Ferner kann gemäß weiteren Ausgestaltungen vorgesehen sein, dass die dem Kegelritzel der Kegelritzelwelle benachbart angeordnete Innenringhälfte im Durchmesser und/oder in der axialen Länge größer als die andere Innenring-hälfte ausgebildet ist.

*Andere praktische Ausgestaltungen der Erfindung zeichnen sich dadurch aus, dass der Außenrings und*/*oder der Innenring spangebend hergestellt sind, und*/*oder*, *dass die Lagerkugeln beider Laufbahnen eines Schrägkugellagers in Käfigen geführt sind und den gleichen oder einen unterschiedlichen Durchmesser aufweisen.*

### Kurze Beschreibung der Zeichnungen

Die Erfindung wird im Folgenden anhand der beiliegenden Zeichnung an einigen Ausführungsformen näher erläutert. Darin zeigt
- Fig. 1: eine schematische Darstellung eines ersten Ausführungsbeispiels eines erfindungsgemäß *hergestellten* Schrägkugellagers,
- Fig. 2: ein zweites Ausführungsbeispiel eines erfindungsgemäß *herge-stellten* Schrägkugellagers,
- Fig. 3a bis 3c: Abbildungen von Verfahrensschritten zur Herstellung eines Schrägkugellagers gemäß der Erfindung im Längsschnitt, und
- Fig. 4: eine Abbildung eines dazu alternativ hergestellten Schrägkugellagers bei dessen Herstellung.

### Detaillierte Beschreibung der Zeichnungen

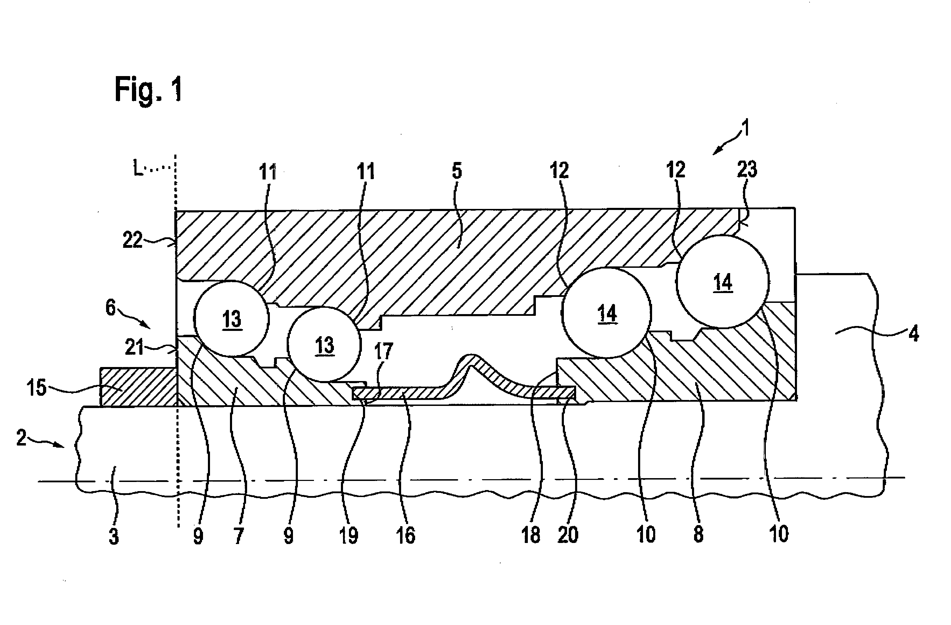

In Fig. 1 ist schematisch ein erstes Schrägkugellager 1 dargestellt, welches auf einer Kegelritzelwelle 2 eines nicht näher dargestellten Hinterachsgetriebes eines Kraftfahrzeugs montiert ist. Die Kegelritzelwelle 2 weist einen abgestuften Schaft 3 auf, an dessen rechtsseitigem Ende ein nur angedeutetes Kegelritzel 4 angeordnet ist. In einem nicht dargestellten Gehäuse des Hinterachsgetriebes ist die Kegelritzelwelle 2 über das Schrägkugellager 1 gehalten.

Das Schrägkugellager 1 besteht aus einem einstückigen Lageraußenring 5 und aus einem geteilten Innenring 6, welcher aus einer das Ritzelflanschlager bildenden ersten Innenringhälfte 7 und aus einer das Ritzelkopflager bildenden zweiten Innenringhälfte 8 besteht. Die beiden Innenringhälften 7 und 8 weisen jeweils zwei radial äußere Schultern 9 und 10 auf, welche zusammen mit Schultern 11 und 12 des Außenringes 5 Laufbahnen für Lagerkugeln 13 und 14 begrenzen. Die Lagerkugeln 13 und 14 sind jeweils in nicht dargestellten Lagerkäfigen geführt.

Der Fig. 1 ist weiter entnehmbar, dass die Lagerkugeln 13 und 14 einen unterschiedlichen Durchmesser besitzen. Da in der Nähe des Kegelritzels 4 die größten radialen und axialen Belastungen der Kegelritzelwelle 2 auftreten, ist die zweite Innenringhälfte 8 und ihre Lagerkugeln 14 wesentlich größer dimensioniert als die erste Innenringhälfte 7 und die zugeordneten Lagerkugeln 13. Durch die O-Anordnung der beiden durch die Innenringhälften 7, 8 begrenzten Teillager zueinander ist sichergestellt, dass jeweils eines der Teillager eine Kraft in axialer Richtung aufnehmen kann, also ein axiales Verschieben der Kegelritzelwelle 2 nicht möglich ist.

Die Vorspannung wird nun derart erzeugt, dass durch Aufschrauben einer Bundmutter 15 auf den Schaft 3 der Kegelritzelwelle 2 die erste Innenringhälfte 7 axial nach rechts bewegt wird, so dass die Lagerkugeln 13 und 14 unter Vorspannung gesetzt werden. Zwischen den Innenringhälften 7 und 8 ist eine Stauchbuchse 16 angeordnet, die formschlüssig mit den Lagerringhälften 7, 8 verbunden ist, wozu in Stirnkanten 17, 18 der Innenringhälften 7, 8 Nuten 19, 20 eingebracht sind, in welchen die Stauchbuchse 16 aufgenommen ist.

Beim Anziehen der Bundmutter 15 wird demnach zunächst die erste Innenringhälfte 7 des Schrägkugellagers 1 nach rechts verschoben. Durch das Anziehen der Bundmutter 15 wird auch der Schaft 3 unter Mitnahme der Innenringhälfte 8 des Schrägkugellagers 1 nach axial links verschoben. Durch die Verkürzung des axialen Abstandes der Stirnflächen 17 und 18 zueinander wird die Stauchbuchse 18 gestaucht, so dass sie sich nach radial oben in Richtung des Außenringes 5 aufwirft. Die Stauchbuchse 16 dient beim erfindungsgemäßen Schrägkugellager 1 zum einen als Schraubensicherung für die Bundmutter 15 durch Einstellen einer Gegenkraft. Zum anderen dient die mit den beiden Innenringhälften 7 und 8 bei der Herstellung des Schrägkugellagers 1 formschlüssig verbundene Stauchbuchse 16 als Halteelement, um so eine transportfähige und transportsichere Lagereinheit zu schaffen, die als fertig vormontierte und vorgespannte Lagerpatrone zum Endkunden geliefert werden kann.

Die erste Innenringhälfte 7 und der Außenring 5 weisen stirnseitige Anlageflächen 21 bzw. 22 auf, wobei die Bundmutter 15 an der Anlageflächen 21 der ersten Innenringhälfte 7 anliegt. Die Anlagefläche 22 des Außenringes 5 kann an einer nicht dargestellten Gehäusewandung anliegen. Ebenso ist es möglich, dass eine axiale Anlagefläche 23 des Außenringes 5 an einer Gehäusewandung anliegt.

Die Anlageflächen 21 bzw. 22 der ersten Innenringhälfte 7 bzw. des Außenrings 5 sind so ausgestaltet, dass diese Anlageflächen 21 und 22 exakt miteinander fluchten, sobald durch axiale Verschiebung der Innenringhälfte 7 gegenüber dem Außenring 5 eine vorbestimmte Vorspannung im Lager 1 eingestellt ist. Diese Vorspannung ist durch die axiale Breite der ersten Innenringhälfte 7 bzw. des Außenringes 5 variierbar. In Fig. 1 ist dieser Zustand durch die gepunktete Linie L dargestellt. Sobald die erste Innenringhälfte 7 und der Außenring 5 axial miteinander fluchten oder auf Bund gegeneinander verschoben sind, ist das gewünschte Maß an Vorspannung eingestellt, welches auf einfache Weise durch optische Meßsysteme erfasst werden kann.

In Fig. 2 ist schematisch ein zweites Schrägkugellager 24 dargestellt, welches ebenso wie das in Fig. 1 dargestellte Schrägkugellager 1 auf einer Kegelritzelwelle 2 eines nicht näher dargestellten Verteilergetriebes eines Kraftfahrzeugs montiert ist. Das Schrägkugellager 24 besteht ebenfalls aus einem einstückigen Lageraußenring 5 und aus einem geteilten Innenring 6. Der Innenring 6 besteht ebenfalls aus zwei Innenringhälften 25 und 26, die bezüglich ihrer axial inneren Stirnkanten 27, 28 abweichend von den in Fig. 1 dargestellten Innenringhälften 7 und 8 ausgebildet sind. Die als Anlageflächen wirkenden Stirnkanten 27, 28 stoßen nach einem Anziehen der Bundmutter 15 im vorgespannten Zustand, welcher in Fig. 2 dargestellt ist, aneinander. Sobald die Stirnkanten 27 und 28 aneinander stoßen, ist das Schrägkugellager 24 auf Block gezogen und die korrekte Vorspannung ist hierdurch eingestellt.

Im nicht vorgespannten, also spannungslosen Zustand besteht zwischen den Stirnkanten 27, 28 der beiden Innenringhälften 25 und 26 ein axialer Abstand. In die radial innere Mantelflächen der Innenringhälften 25 und 26 ist jeweils eine Nut 29, 30 eingebracht, in welche ein mit endständigen Klammern 31, 32 versehener Sicherungsring 33 derart eingreift, dass im spannungslosen Zustand des Schrägkugellagers ein axiales Spiel zwischen den Innenringhälften 25 und 26 ermöglicht ist. Durch den Sicherungsring 33 sind die Innenringhälften 25 und 26 zudem verliersicher gehalten, so dass das Schrägkugellager 24 als transportsichere und transportfähige Lagereinheit oder Lagerpatrone ausgebildet ist.

In Fig. 2 ist ein Zustand dargestellt, bei dem auch die Anlagefläche 22 des Außenringes 5 mit einer stirnseitigen Anlagefläche 34 der Innenringhälfte 25 fluchtet, so dass der axiale Abstand zwischen diesen Anlageflächen 22 und 34 gleich Null ist, welches mit der gepunkteten Linie L angedeutet wird. Es ist jedoch auch möglich, allein die axial inneren Stirnkanten 27, 28 auf Block anzuziehen. Ferner können die Innenringhälften 25 und 26 jeweils auch mit einer zusätzlichen Ausnehmung oder Nut versehen sein, ich welche die in Figur 1 dargestellte Stauchbuchse 16 engesetzt werden kann, welche dann ebenfalls als Schraubensicherung für die Bundmutter 15 dient.

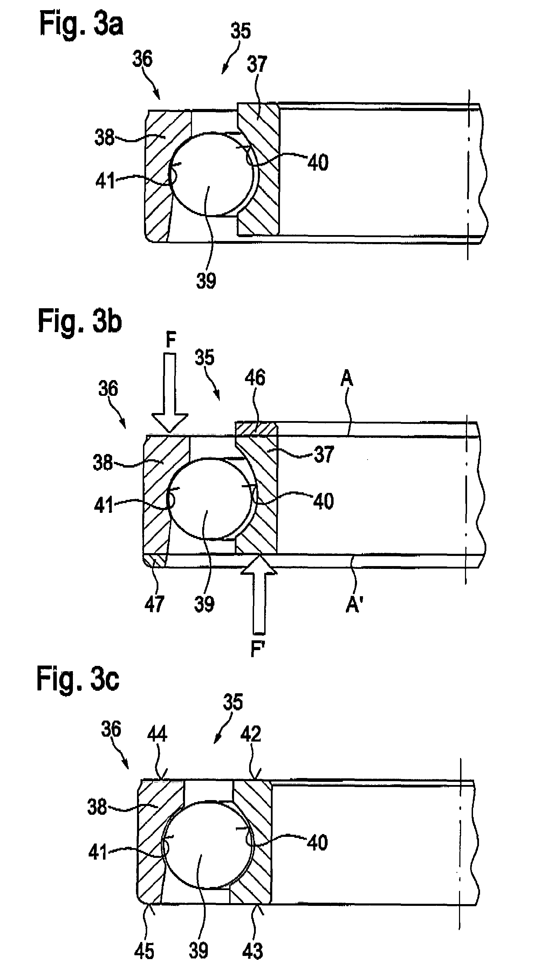

In den Figuren 3a bis 3c sind schematisch erfindungsgemäße Verfahrensschritte zur Herstellung eines Schrägkugellagers dargestellt, welches vereinfacht anhand eines einreihigen Schrägkugellagers erläutert wird. Das Herstellprinzip ist bei den erfindungsgemäßen Schrägkugellagern 1 bzw. 24 in mehrreihiger, insbesondere vierreihiger Ausgestaltung mit einteiligem Außenring 5 und geteiltem Innenring 6 aber das gleiche.

In Fig. 3a ist ein Rohling 35 eines Schrägkugellagers 36 dargestellt, der wie die Schrägkugellager 1 und 24 einen Innenring 37, einen Außenring 38 und dazwischen angeordnete Lagerkugeln 39 aufweist, welche in Laufbahnen 40 und 41 rotieren. In dem in Fig. 3a dargestellten Zustand ist das Schrägkugellager 36 noch nicht vorgespannt. Innenring 37 und Außenring 38 weisen bezüglich ihrer axialen Breite ein Übermaß auf.

In Fig. 3b ist der nächste Verfahrensschritt zur Herstellung eines Lagers gemäß der Erfindung dargestellt, bei welchem der Rohling 35 des Schrägkugellagers 36 mit dem bezüglich der Breite übermaßigen Innenring 37 und dem bezüglich der Breite übermaßigen Außenring 38 mit einer der gewünschten Vorspannkraft entsprechenden axialen Kraft beaufschlagt und festgelegt wird. Die Fixierung und die Kraftauftragung können durch geeignete Spannwerkzeuge erfolgen, die nicht näher dargestellt sind. Die Pfeile F und F' zeigen die axiale Druckbelastung an.

Die schwarzen Bereiche des Innenringes 37 und des Außenringes 38 deuten übermäßige Abweichungen von den Ideallinien A und A' an, welche zeigen, auf welcher Linie die Anlageflächen 42 und 43 des Innenrings 37 sowie die Anlageflächen 44 und 45 des Außenringes 38 angeordnet sein müssten, um miteinander zu fluchten. Die Anlageflächen 42 bis 45 sind in Fig. 3b daher noch nicht zu erkennen, wohl aber in Fig. 3c. Die schwarz markierten Bereiche in Fig. 3b stellen demnach abzutragende Überstände 46 und 47 dar.

Um die Flucht der Anlagefläche 42 des Innenringes 37 mit der Anlagefläche 44 des Außenringes 38 herzustellen, wird in einem anschließenden Herstellschritt der übermaßige Überstand 46 entfernt. Wird der Überstand 47 des Außenringes 38 nicht ebenfalls durch Abschleifen, Fräsen oder auf andere geeignete Art und Weise entfernt, so lässt sich eine X- oder O- Anordnung des dargestellten Schrägkugellagers 36 realisieren. Um aber ebenso eine X- und Tandem-Einbauweise zu ermöglichen, muss ebenso der Überstand 47 des Außenringes 38 entfernt werden.

Nach dem Entfernen wenigstens von wenigstens einem der Überstände 46, 47 wird das Schrägkugellager 36 wieder entspannt, wodurch der Innenring 37 und der Außenring 38 wieder eine Anordnung mit Spiel einnehmen, in der die Anlageflächen 42 bis 45 außer Flucht sind. In diesem Zustand kann das Schrägkugellager 36 als Lagerpatrone versandfertig gemacht werden.

In Fig. 3c ist ein Zustand dargestellt, der den in Bezug auf die Fig. 1 beschriebenen Verhältnissen entspricht, also nach Einbau in ein bestimmungsgemäßes Bauteil. In diesem Zustand fluchten die Anlageflächen 42 bis 45 exakt miteinander, welches dem mit dem Einbau beauftragten Monteur signalisiert, dass das exakte Maß der Vorspannung eingestellt wurde.

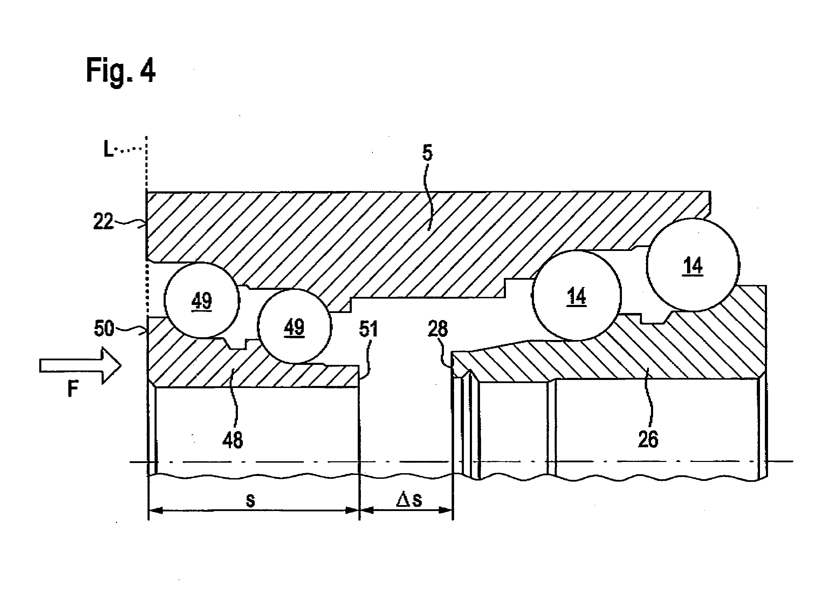

In Fig. 4 ist schematisch ein das alternative erfindungsgemäße Verfahren zur Herstellung eines Schrägkugellagers dargestellt, wobei sich dieses Verfahren besonders gut zur Herstellung des Schrägkugellagers 24 gemäß Fig. 2 eignet. Zunächst werden der Außenring 5 und die Innenringhälfte 26 mit dazwischen angeordneten Lagerkugeln 14 zusammengesetzt und in eine an sich bekannte Vorrichtung eingefügt. Anschließend wird ein so genannter Masterinnenring oder Maßring 48 mit toleranzfreien Maßkugeln 49 von der anderen Seite in die Vorrichtung eingebracht. Bei Maßringen handelt es sich um Lehren, die in der Regel eine geringere axiale Breite aufweisen als der in der Praxis eingesetzte Innenring. Maßkugeln sind solche Kugeln, welche spielfrei in den Maßring 48 eingesetzt werden können und daher einen größeren Durchmesser haben als die Lagerkugeln 13 aus Fig. 1.

Anschließend wird auf die axial äußere Stirnkante 50 des Maßrings 48 ein Druck ausgeübt, welches mit dem Pfeil F andeutet ist, und zwar so lange, bis das gewünschte Maß an Vorspannung eingestellt ist. In dieser Lage wird der Maßring 48 fixiert. Anschließend wird der Abstand Δs zwischen der axial inneren Stirnkante 51 des Maßrings 48 und der axial inneren Stirnkante 28 der rechten Innenringhälfte 26 gemessen. Dem Wert des Abstandes Δs wird die Breite "s" des Maßrings 48 zuaddiert. Die Summe bildet dann die Breite der zu fertigenden linken Innenringhälfte 25.

### Bezugszeichenliste

- 1: Schrägkugellager
- 2: Kegelritzelwelle
- 3: Schaft
- 4: Kegelritzel
- 5: Außenring
- 6: Innenring
- 7: Innenringhälfte
- 8: Innenringhälfte
- 9: Schulter
- 10: Schulter
- 11: Schulter
- 12: Schulter
- 13: Lagerkugel
- 14: Lagerkugel
- 15: Bundmutter
- 16: Stauchbuchse
- 17: Stirnkante
- 18: Stirnkante
- 19: Nut
- 20: Nut
- 21: Anlagefläche
- 22: Anlagefläche
- 23: Anlagefläche
- 24: Schrägkugellager
- 25: Innenringhälfte
- 26: Innenringhälfte
- 27: Stirnkante
- 28: Stirnkante
- 29: Nut
- 30: Nut
- 31: Klammer
- 32: Klammer
- 33: Sicherungsring
- 34: Anlagefläche
- 35: Rohling
- 36: Schrägkugellager
- 37: Innenring
- 38: Außenring
- 39: Lagerkugel
- 40: Laufbahn
- 41: Laufbahn
- 42: Anlagefläche
- 43: Anlagefläche
- 44: Anlagefläche
- 45: Anlagefläche
- 46: Überstand
- 47: Überstand
- 48: Maßring
- 49: Maßkugel
- 50: Stirnkante
- 51: Stirnkante

- F, F': Pfeil, Kraft
- A, A': Ideallinie
- L: Linie, Fluchtungslinie
- S: Spalt
- s: Breite des Maßrings 48
- Δs: Abstand zwischen Maßring 48 und Innenringhälfte 26

## Patentansprüche

1. Verfahren zur Herstellung eines mehrreihigen axial vorgespannten Schrägkugellagers (1; 24; 36) mit einem einstückigen Außenring (5; 38) und einem aus zwei Innenringhälften (7, 8; 25, 26) bestehenden Innenring (6; 37), wobei der Außen- und Innenring stirnseitige Anlageflächen (21, 22, 34) aufweisen, wobei jede Innenringhälfte (7, 8; 25, 26) wenigstens eine von einer Schulter (9; 10) begrenzte Laufbahn aufweist, welche mit einer von einer Schulter (11; 12) begrenzten Laufbahn des Außenrings (5; 38) korrespondiert, und bei dem in den Laufbahnen Lagerkugeln (13; 14; 39) angeordnet sind, welche durch die Schultern (9, 10, 11, 12) axial abgestützt sind, wobei wenigstens eine Innenringhälfte (7, 8; 25, 26) zur Einstellung einer spielfreien Vorspannkraft axial verschiebbar ist, und wobei zwischen axial inneren Stirnkanten (17, 18; 27, 28) der Innenringhälften (7, 8; 25, 26) wenigstens im unverspannten Zustand ein Abstand eingestellt wird, **dadurch gekennzeichnet, dass**
■ in einem ersten Schritt ein Rohling (35) des Schrägkugellagers (1; 24; 36), der bezüglich der axialen Breite übermaßige Lagerringe aufweist, mit einer der gewünschten Vorspannkraft entsprechenden axialen Kraft (F) beaufschlagt und festgelegt wird,
■ und in einem zweiten Schritt die axiale Breite eines oder beider Innenringhälften (7; 8; 25; 26) des Rohlings (35) zur Erzeugung fluchtender Anlageflächen (21, 22; 34) verringert wird.

2. Verfahren nach Anspruch *1*, **dadurch gekennzeichnet, dass** im zweiten Schritt die axiale Breite eines oder beider Innenringhälften (7; 8; 25; 26) des Innenringes (6; 37) und die axiale Breite des Außenringes (5) verringert wird.

3. Verfahren zur Herstellung eines mehrreihigen axial vorgespannten Schrägkugellagers (1; 24; 36) mit einem einstückigen Außenring (5) und einem aus zwei Innenringhälften (7, 8; 25, 26) bestehenden Innenring (6), wobei jede Innenringhälfte (7, 8; 25, 26) wenigstens eine von einer Schulter (9; 10) begrenzte Laufbahn aufweist, welche mit einer von einer Schulter (11; 12) begrenzten Laufbahn des Außenrings (5; 38) korrespondiert, und bei dem in den Laufbahnen Lagerkugeln (13; 14; 39) angeordnet sind, welche durch die Schultern (9, 10, 11, 12) axial abgestützt sind, wobei wenigstens eine Innenringhälfte (7, 8; 25, 26) zur Einstellung einer spielfreien Vorspannkraft axial verschiebbar ist, und wobei zwischen axial inneren Stirnkanten (17, 18; 27, 28) der Innenringhälften (7, 8; 25, 26) wenigstens im unverspannten Zustand ein Abstand eingestellt wird, **dadurch gekennzeichnet, dass**
■ in einem ersten Schritt der Außenring (5) und eine Innenringhälfte (26) mit dazwischen angeordneten Lagerkugeln (14) zusammengesetzt werden,
■ in einem zweiten Schritt ein Maßring (48) mit einer Breite (s) und übermaßige Maßkugeln (49) mit dem Außenring (5) verbunden werden, wobei ein Abstand zwischen dem Maßring (48) und dieser Innenringhälfte (26) eingestellt wird,
■ in einem dritten Schritt eine der einzustellenden Vorspannung entsprechende axiale Kraft (F) auf den Maßring (48) aufgebracht und dieser Maßring (48) fixiert wird,
■ in einem vierten Schritt der Abstand (Δs) zwischen Maßring (48) und dieser Innenringhälfte (26) gemessen wird,
■ und in einem fünften Schritt die andere Innenringhälfte (25) hergestellt wird, wobei die axiale Breite der anderen Innenringhälfte (25) der Summe aus der Breite (s) des Maßrings (48) und dem Abstand (Δs) entspricht.

## Claims

1. Method for producing a multiple-row axially prestressed angular-contact ball bearing (1; 24; 36) having a single-piece outer ring (5; 38) and an inner ring (6; 37) which consists of two inner ring halves (7, 8; 25, 26), the outer and inner ring having end-side bearing faces (21, 22, 34), each inner ring half (7, 8; 25, 26) having at least one raceway which is delimited by a shoulder (9; 10) and corresponds with a raceway of the outer ring (5; 38), which raceway is delimited by a shoulder (11; 12), and in which bearing balls (13; 14; 39) are arranged in the raceways, which bearing balls (13; 14; 39) are supported axially by the shoulders (9, 10, 11, 12), at least one inner ring half (7, 8; 25, 26) being axially displaceable in order to set a play-free prestressing force, and a spacing being set at least in the unstressed state between axially inner end edges (17, 18; 27, 28) of the inner ring halves (7, 8; 25, 26), **characterized in that**,
■ in a first step, a blank (35) of the angular-contact ball bearing (1; 24; 36) which has oversized bearing rings with regard to the axial width is loaded with an axial force (F), which corresponds to the desired prestressing force, and is fixed,
■ and, in a second step, the axial width of one or both inner ring halves (7; 8; 25; 26) of the blank (35) is reduced in order to produce flush bearing faces (21, 22; 34).

2. Method according to Claim 1, **characterized in that**, in the second step, the axial width of one or both inner ring halves (7; 8; 25; 26) of the inner ring (6; 37) and the axial width of the outer ring ( 5 ) are reduced.

3. Method for producing a multiple-row axially prestressed angular-contact ball bearing (1; 24; 36) having a single-piece outer ring (5) and an inner ring (6) which consists of two inner ring halves (7, 8; 25, 26), each inner ring half (7, 8; 25, 26) having at least one raceway which is delimited by a shoulder (9; 10) and corresponds with a raceway of the outer ring (5; 38), which raceway is delimited by a shoulder (11; 12), and in which bearing balls (13; 14; 39) are arranged in the raceways, which bearing balls (13; 14; 39) are supported axially by the shoulders (9, 10, 11, 12), at least one inner ring half (7, 8; 25, 26) being axially displaceable in order to set a play-free prestressing force, and a spacing being set at least in the unstressed state between axially inner end edges (17, 18; 27, 28) of the inner ring halves (7, 8; 25, 26), **characterized in that**,
■ in a first step, the outer ring (5) and an inner ring half (26) are assembled with bearing balls (14) which are arranged between them,
■ in a second step, a master ring (48) having a width (s) and oversized master balls (49) are connected to the outer ring (5), a spacing being set between the master ring (48) and the said inner ring half (26),
■ in a third step, an axial force (F) which corresponds to the prestress which is to be set is applied to the master ring (48) and the said master ring (48) is fixed,
■ in a fourth step, the spacing (Δs) between the master ring (48) and the said inner ring half (26) is measured,
■ and, in a fifth step, the other inner ring half (25) is produced, the axial width of the other inner ring half (25) corresponding to the sum of the width (s) of the master ring (48) and the spacing (Δs).

## Revendications

1. Procédé de fabrication d'un roulement à billes à contact oblique (1 ; 24 ; 36) précontraint axialement à plusieurs rangées comprenant une bague extérieure d'une seule pièce (5 ; 38) et une bague intérieure (6 ; 37) constituée de deux moitiés de bague intérieure (7, 8 ; 25, 26), la bague extérieure et la bague intérieure présentant des faces d'appui frontales (21, 22, 34), chaque moitié de bague intérieure (7, 8 ; 25, 26) présentant au moins une piste de roulement limitée par un épaulement ( 9 ; 10) , qui correspond à une piste de roulement de la bague extérieure (5 ; 38) limitée par un épaulement (11 ; 12), et dans lequel des billes de roulement (13 ; 14 ; 39) sont disposées dans les pistes de roulement, lesquelles sont supportées axialement par les épaulements (9, 10, 11, 12), au moins une moitié de bague intérieure (7, 8 ; 25, 26) pouvant être déplacée axialement pour l'ajustement d'une force de précontrainte sans jeu, et au moins dans l'état non précontraint, un espacement s'ajustant entre des bords frontaux axialement intérieurs (17, 18 ; 27, 28) des moitiés de bague intérieure (7, 8 ; 25, 26), **caractérisé en ce que**
- dans une première étape, une pièce brute (35) du roulement à billes à contact oblique (1 ; 24 ; 36), qui présente des bagues de roulement de largeur axiale surdimensionnée, est sollicitée par une force axiale (F) correspondant à la force de précontrainte souhaitée et est fixée,
- et dans une deuxième étape, la largeur axiale d'une ou des deux moitiés de bague intérieure (7 ; 8 ; 25 ; 26) de la pièce brute (35) est réduite pour produire des faces d'appui (21, 22 ; 34) en affleurement.

2. Procédé selon la revendication 1, **caractérisé en ce que** dans la deuxième étape, la largeur axiale d'une ou des deux moitiés de bague intérieure (7 ; 8 ; 25 ; 26) de la bague intérieure (6 ; 37) et la largeur axiale de la bague extérieure (5) sont réduites.

3. Procédé de fabrication d'un roulement à billes à contact oblique (1 ; 24 ; 36) précontraint axialement à plusieurs rangées comprenant une bague extérieure d'une seule pièce (5) et une bague intérieure (6) constituée de deux moitiés de bague intérieure (7, 8 ; 25, 26), chaque moitié de bague intérieure (7, 8 ; 25, 26) présentant au moins une piste de roulement limitée par un épaulement (9 ; 10), qui correspond à une piste de roulement de la bague extérieure (5 ; 38) limitée par un épaulement (11 ; 12), et dans lequel des billes de roulement (13 ; 14 ; 39) sont disposées dans les pistes de roulement, lesquelles sont supportées axialement par les épaulements (9, 10, 11, 12), au moins une moitié de bague intérieure (7, 8 ; 25, 26) pouvant être déplacée axialement pour l'ajustement d'une force de précontrainte sans jeu, et au moins dans l'état non précontraint, un espacement s'ajustant entre des bords frontaux axialement intérieurs (17, 18 ; 27, 28) des moitiés de bague intérieure (7, 8 ; 25, 26), **caractérise en ce que**
- dans une première étape, la bague extérieure (5) et une moitié de bague intérieure (26) sont assemblées avec des billes de roulement (14) disposées entre elles,
- dans une deuxième étape, une bague gabarit (48) ayant une largeur (s) et des billes gabarit surdimensionnées (49) sont connectées à la bague extérieure (5), un espacement s'ajutant entre la bague gabarit (48) et cette moitié de bague intérieure (26),
- dans une troisième étape, une force axiale (F) correspondant à la précontrainte à ajuster est appliquée à la bague gabarit (48) et cette bague gabarit (48) est fixée,
- dans une quatrième étape, l'espacement (Δs) entre la bague gabarit (48) et cette moitié de bague intérieure (26) est mesuré,
- et dans une cinquième étape, l'autre moitié de bague intérieure (25) est fabriquée, la largeur axiale de l'autre moitié de bague intérieure (25) correspondant à la somme de la largeur (s) de la bague gabarit (48) et de l'espacement (Δs).
